# EUROPÄISCHE PATENTANMELDUNG

(11) **EP 0 663 358 A1**
(43) Veröffentlichungstag der Anmeldung: **19.07.1995**
(21) Anmeldenummer: 94100504.3
(22) Anmeldetag: 14.01.1994
(51) Int. Cl.: B65G 53/28, B65G 53/26, B65G 53/22, B61D 5/00

(54) **Behälter, insbesondere auf Schienenfahrzeugen, für staubförmige Schüttgüter, wie Zement**

(71) Anmelder: IBAU HAMBURG INGENIEURGESELLSCHAFT INDUSTRIEBAU MBH, D-20459 Hamburg (DE)
(72) Erfinder: Sönnichsen, Karl-Peter, D-25920 Risum-Lindholm (DE); Appenzeller, Edgar-Gerhard, D-21217 Seevetal-Over (DE)
(74) Vertreter: von Raffay, Vincenz, Dipl.-Ing.

(57) **Zusammenfassung**

Der Behälter, insbesondere für Schienenfahrzeuge, dient dem Transport von staubförmigen Schüttgut, insbesondere Zement.
Der Behälter ist mit einer oberen dichtverschließbaren Einfüllöffnung (21) und mit einem trichterförmigen Boden (3) ausgerüstet. Der trichterförmige Boden geht an der Sohle in einen waagerechten Belüftungsboden (7) mit Druckluftzuführung (6) über.
Über dem Belüftungsboden befinden sich vorzugsweise an beiden Seiten in dem durch den trichterförmigen Boden freigelassenen Abschnitt Auslauftaschen (9), mit einem Saugstutzen (5) mit Entleerungsöffnung (22). In den Saugstutzen führen vorzugsweise zwei Luftansaugleitungen. Dieser Behälter läßt sich durch ortsgebundene kontinuierlich arbeitende und große Mengen verarbeitende saugpneumatische Entleerungseinrichtungen entladen. Der Behälter, d.h. das entsprechende Fahrzeug, läßt sich kostengünstig aus vorhandenen Fahrzeugen mit entsprechenden Behältern umrüsten oder auch neu bauen.

## Beschreibung

Die Erfindung betrifft einen Behälter nach dem Oberbegriff des Patentanspruches 1.

Es sind grundsätzlich zwei verschiedene Behälterarten bekannt. Es gibt Behälter, die unter Druck setzbar sind, um diese zu entleeren. Diese Spezialbehälter sind aufwendig und entsprechend teuer herzustellen. Die Entleerung erfolgt mit relativ geringen Mengenströmen, beispielsweise auf Baustellen.

Nicht für eine druckpneumatische Förderung geeignete Behälter werden normalerweise saugpneumatisch entleert. Diese Art der Entleerung wird häufig bei Seeschiffen eingesetzt. Hierbei werden Saugrohrarme mittels Hebezeuge in die Behälter geführt und das Schüttgut wird durch ständige Positionsänderung abgesaugt und in dem Rohr abgefördert. Derartige Vorrichtungen sind aus der DE-PS 1 117 043, der US-PS 4 988 240 und der US-PS 3 942 561 bekannt. Diese eignen sich aber nur sehr bedingt zum Entleeren von Behältern auf Schienenfahrzeugen.

Es besteht nun zunehmend die Forderung auch auf Schienenfahrzeugen Zement und ähnliche Massenschüttgüter über große Entfernungen auf dem Landwege zu transportieren, um dann einen Seetransport anzuschließen. Die bekannten Schienenfahrzeuge mit Behältern sind aber nicht für eine pneumatische Entleerung geeignet und eingerichtet.

Der Erfindung liegt daher die Aufgabe Zugrunde, einen Behälter der eingangs genannten Art zu schaffen, gegebenenfalls vorhandene Behälter umzurüsten, um diese für eine saugpneumatische Entleerung einsetzbar zu machen.

Diese Aufgabe wird durch das Kennzeichnen des Patentanspruches 1 gelöst.

Ob es sich nun mehr umgerüstete oder neu gebaute Behälter auf Fahrzeugen, insbesondere Schienenfahrzeugen, handelt, wichtig ist, daß an der Sohle eine Belüftungsboden vorgesehen ist, durch den das Schüttgüt aufgelockert wird, so daß es sich in den Bereich der Auslauftaschen bewegen kann, wenn hierdurch die Saugstutzen abgesaugt werden. Vorzugsweise sind die Auslauftaschen und die Saugstutzen an beiden Seiten der Fahrzeuge vorhanden, so daß es nicht von Bedeutung ist, mit welcher Seite das entsprechende Fahrzeug an die Entleerungsvorrichtung herangefahren wird. Die Entleerung erfolgt nicht mit Hilfe von Druckluft, sondern durch Anschluß des vorgesehenen Saugstutzens an eine entsprechende Saugleitung und Öffnung der Luftansaugleitung, damit die Luftmenge, die zur Förderung erforderlich ist, in diesem Bereich angesaugt werden kann. Die Luft, die in dem Schüttgutluftgemisch bei der Abförderung vorhanden ist, ist einmal die durch den Belüftungsboden zugeführte Luft und zum anderen die durch die Luftansaugleitung mit angesaugte Luft. Die Behälter lassen sich durch vorhandene saugpneumatische Entleerungseinrichtungen vorort, d.h. beispielsweise an einem Kae, entleeren. Die Entleerung erfolgt kontinuierlich, wobei das Schüttgut unter Schwerkrafteinwirkung in den Bereich des Belüftungsbodens nachfließt.

Der erfindungsgemäße Behälter läßt sich auch aus vorhandenen einfachen Behältern durch Veränderung des Bodenbereichs, d.h. durch Einbau der entsprechenden Einrichtungen umrüsten. Vorhandene Eisenbahnwagen lassen sich daher kostengünstig zum Transport entsprechender Schüttgüter umrüsten, wobei eine saugpneumatische Entleerung mit ihren grundsätzlich bekannten Vorteilen möglich ist. Die Entleerungseinrichtungen befinden sich dort, wo die Entleerung erfolgen soll, beispielsweise auf einem Kae oder Schiff.

In den Unteransprüchen sind vorteilhafte Ausgestaltungen unter Schutz gestellt.

Im folgenden wird die Erfindung unter Hinweis auf die Zeichnung anhand eines Ausführungsbeispieles näher erläutert.

Es zeigt:
- Fig. 1: einen schematischen Querschnitt durch einen Behälter auf einem Schienenfahrzeug angeschlossen an eine saugpneumatische Entleerungseinrichtung;
- Fig. 2: einen Schnitt durch den unteren Teil des trichterförmigen Bodens mit Belüftungsboden;
- Fig. 3: eine Seitenansicht auf den Bereich des Auslaufstutzens mit Luftansaugleitungen; und
- Fig. 4: eine schematische Ansicht zur Veranschaulichung der Entladung des Behälters nach Fig. 1 und Umschlag des Schüttgutes in ein Schiff.

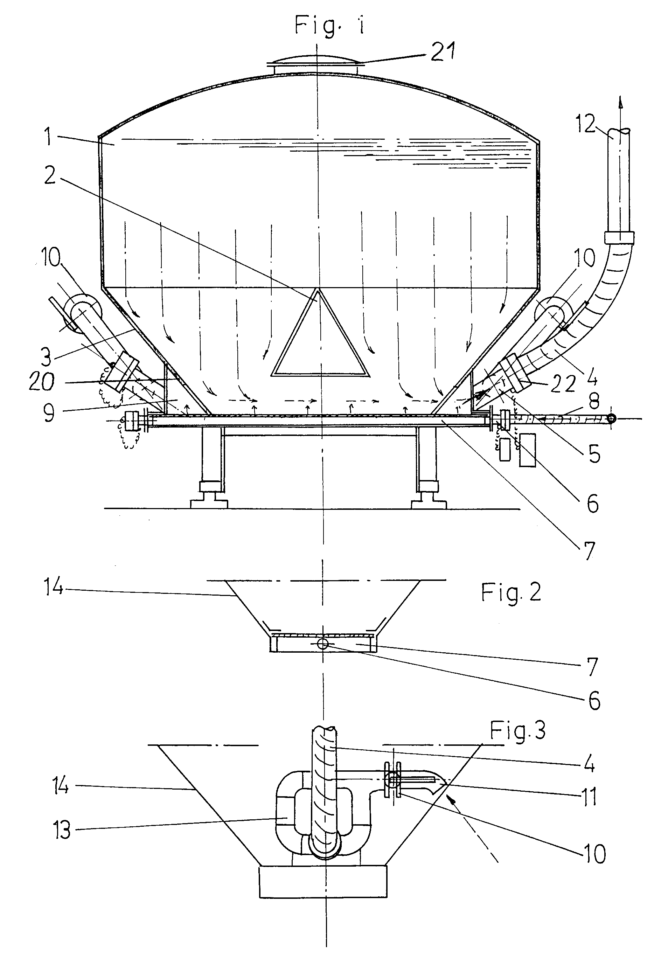

Der in Fig. 1 dargestellte Behälter 1 ist auf einem Schienenfahrzeug montiert. Die Schienen und die Schienenräder sind angedeutet. Es handelt sich um einen Querschnitt. In Längsrichtung ist der Behälter vorzugsweise langgestreckt entsprechend der Länge des Eisenbahnwaggons.

Der Boden ist bei 3 trichterförmig ausgebildet. An der Sohle befindet sich ein im wesentlichen waagerecht verlaufender Belüftungsboden 7. Diese Konstruktion kann durch Abschneiden bekannter Behälter im unteren Bereich des trichterförmigen Bodens hergestellt werden, wenn nicht von vornherein eine derartige Bauweise bevorzugt wird. Der Belüftungsboden ermöglicht einen Luftaustritt in den Behälter, wobei in diesem Bereich ein Verschleißschutzgewebe zusätzlich angeordnet sein kann. Links und rechts unter dem trichterförmigen Boden 3 befinden sich ebenfalls über dem Belüftungsboden 7 Auslauftaschen 9, die unterhalb von Flanken 20 mit dem Behälterinnenraum verbunden sind. Die Druckluft für den Belüftungsboden ist an beiden Seiten bei 6 über einen entsprechenden Schlauch 8 zuführbar.

Die Auslauftaschen 9 sind mit Saugstutzen 5 versehen, die schräg nach oben verlaufen und eine Entleerungsöffnung 22 aufweisen. Diese Entleerungsöffnung 22 ist entweder durch einen Deckel verschließbar oder an einen pneumatischen Saugschlauch 4 anschließbar. Der Saugschlauch 4 geht in einen Förderleitung 12 über, die zu einer Behälterschleuse 17 mit aufgesetzten Filter 19 führt.

In den Saugstutzen 5 führen beidseitig Luftansaugleitungen 11 und 13, die durch eine Einrichtung 10 regulierbar bzw. absperrbar sind. Diese Teil der Ansaugleitung ist ebenso wie der Saugstutzen 5 Teil des beweglichen Fahrzeuges.

Die Saugstutzen 5 mit den entsprechenden Einrichtungen sind an beiden Seiten vorgesehen, so daß eine saugpneumatische Entleerung unabhängig von der Fahrtrichtung des Fahrzeuges an einer stationären Entleerungseinrichtung möglich ist.

Der Behälter 1 ist mit einer dichtverschließbaren Einfüllöffnung 21 versehen. In dem Behälter sind Entlastungsdächer 2 über dem Entlüftunsboden 7 vorgesehen.

In den Fig. 2 und 3 sind die Seitenwände des trichterförmigen Bodens mit 14 bezeichnet, da es sich hier um eine im Verhältnis zu Fig. 1 um 90° gedrehten Ansicht handelt.

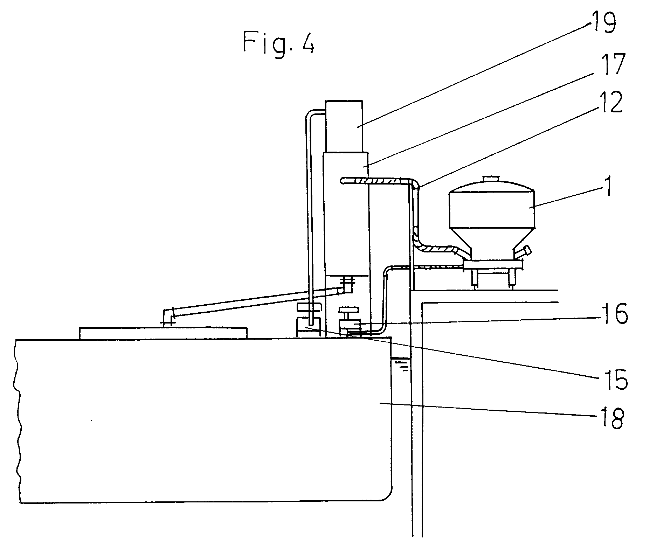

In Fig. 4 ist das Entladen und Umschlagen in ein Schiff 18 in Form einer Prinzipsskizze dargestellt.

Wenn ein mit Zement gefüllter Behälter entladen werden soll und seinen Platz neben der druckpneumatischen Entleerungseinrichtung, wie in Fig. 4 veranschaulicht, erreicht hat, wird zuerst der der Entleerunseinrichtung benachbarte Saugstutzen 5 geöffnet. Solange keine Druckluftzuführung bei 8 erfolgt, tritt auch kein Schüttgut aus. Die Entleerungsöffnung wird dann mit dem Saugschlauch 14 verbunden. Der Druckluftschlauch 8 bei 6 angeschlossen. Ein Gebläse 15 erzeugt den Unterdruck. Ein anderes Gebläse 16 sorgt für die Druckluftzuführung zu dem Schlauch 8.

Wenn sämtliche Verbindungen hergestellt und die entsprechenden Aggregate eingeschaltet sind, wird das Schüttgut im Bereich des Belüftungsbodens aufgelockert. Da Schüttgut aus den Auslauftaschen 9 abgezogen wird, strömt entsprechend Schüttgut unterhalb der Flanken 20 in die Auslauftaschen nach. Durch Regulierung der Einrichtung 10 gelangt soviel Luft in den Bereich des Saugstutzens 5, daß zusammen mit der bereits im Schüttgutstrom vorhandenen Luft ein Schüttgutluftgemisch entsteht, das in die Förderleitung 12 gefördert werden kann und so in die Behälterschleuse 17 gelangt. Diese Entleerung erfolgt kontinuierlich, bis der gesamte Behälter entleert ist. Das Schüttgut in dem Behälter rutscht unter Schwerkrafteinwirkung in den Bodenbereich nach. Der Behälter 1 selbst steht nicht unter Druck.

Aus der Behälterschleuse 17 wird das Schüttgut in das in Fig. 4 angedeutete Schiff 18 gefördert. Es sind große Mengen pro Zeiteinheit umschlagbar. Herkömmliche, nicht für eine saugpneumatische Entleerung vorgesehene Behälterfahrzeuge lassen sich mit verhältnismäßig geringem Aufwand durch Veränderung des Bodenbereiches umrüsten.

## Patentansprüche

1. Behälter, insbesondere auf Schienenfahrzeugen für staubförmige Schüttgüter, wie Zement mit einer oberen Einfüllöffnung (21) und einem trichterförmigen Boden (3) mit Entleerungsöffnungen (22), dadurch gekennzeichnet, daß die Einfüllöffnung (21) dicht verschließbar ist,
daß sich an den trichterförmigen Boden (3) an der Sohle ein waagerechter Belüftungsboden (7) mit Druckluftzuführung (6) anschließt, und
daß über dem Belüftungsboden vorzugsweise an beiden Seiten in dem durch den trichterförmigen Boden freigelassenen Abschnitt Auslauftaschen (9) mit einem zu der zugeordneten Entleerungsöffnung (22) führenden Saugstutzen (5) vorgesehen sind, in den eine Luftansaugleitung (11, 13) führt.

2. Behälter nach Anspruch 1, dadurch gekennzeichnet, daß die Druckluftzuführung zu den Belüftungsboden quer zur Fahrtrichtung erfolgt und daß Druckzuführanschlüsse (6) auf beiden Seiten vorgesehen sind.

3. Behälter nach Anspruch 1 oder 2, dadurch gekennzeichnet, daß die Saugstutzen (5) schwach nach oben geneigt sind.

4. Behälter nach Anspruch 1, 2 oder 3, dadurch gekennzeichnet, daß die Förderluft beidseitig durch zwei Ansaugleitungen (11 und 13) in den Ansaugstutzen (5) geführt wird (Fig. 3).

5. Behälter nach einem oder mehreren der vorstehenden Ansprüche, dadurch gekennzeichnet, daß die Auslauftaschen (9) von dem trichterförmigen Boden (3) in ihrem oberen Bereich zum Teil abgedeckt (bei 20) sind.

6. Vorrichtung nach einem oder mehreren der vorstehenden Ansprüche, dadurch gekennzeichnet, daß in der Luftansaugleitung (11) eine Regulier- oder Absperreinrichtung (10) angeordnet ist.

7. Vorrichtung nach einem oder mehreren der vorstehenden Ansprüche, dadurch gekennzeichnet, daß über dem Belüftungsboden (7) Entlastungseinrichtungen (2) vorgesehen sind.

8. Behälter nach einem oder mehreren der vorstehenden Ansprüche, dadurch gekennzeichnet, daß der Belüftungsboden (7) mit einem Verschleißschutzgewebe abgedeckt ist.
